# EUROPEAN PATENT SPECIFICATION

(11) **EP 1 652 648 B1**
(45) Date of publication and mention of the grant of the patent: **01.10.2008**
(21) Application number: 05110152.5
(22) Date of filing: 28.10.2005
(51) Int. Cl.: B29C 45/17, B65D 19/24

(54) **Plastic pallet**
Kunststoffpalette
Palette en plastique

(30) Priority: 29.10.2004 IT BO20040675
(43) Date of publication of application: 03.05.2006
(73) Proprietor: CGR S.r.l., Reggio Emilia (IT)
(72) Inventor: Rivi, Giuliano, 42019 Scandiano (IT)
(74) Representative: Jorio, Paolo

(56) References cited:
- EP-A- 0 839 732
- WO-A-94/03368
- DE-U1- 29 623 869
- PATENT ABSTRACTS OF JAPAN vol. 1998, no. 11, 30 September 1998 (1998-09-30) -& JP 10 167271 A (IDEMITSU PETROCHEM CO LTD), 23 June 1998 (1998-06-23)
- PATENT ABSTRACTS OF JAPAN vol. 2000, no. 02, 29 February 2000 (2000-02-29) -& JP 11 310235 A (NIPPON PLA PALLET KK), 9 November 1999 (1999-11-09)

## Description

The present invention relates to a plastic pallet.

Plastic pallets have long been manufactured and used instead of wooden pallets, by being more practical and reusable.

Currently used plastic pallets are produced using a conventional injection molding process, and, when finished, have solid sections, and twelve joints in the injected plastic material which invariably result in break points and weakening of the pallet.

Given the above characteristics, known pallets have the drawbacks of being heavy, and of having weak points corresponding to said break points.

These problems are at least partly solved by the pallets according to JP 10167271 A, JP 11310235 A and EP 0 839 732 A.

It is an object of the present invention to provide a plastic pallet designed to solve the problems of the known art in a straightforward, low-cost manner.

According to the present invention, there is also provided an injection molding method for producing plastic pallets according to claim 1 and an injection-molded plastic pallet according to claim 2.

A number of non-limiting embodiments of the invention will be described by way of example with reference to the accompanying drawings, in which:
Figure 1 shows a top view in perspective of a first embodiment of the pallet according to the present invention;
Figure 2 shows a top view in perspective of a second embodiment of the pallet according to the present invention.

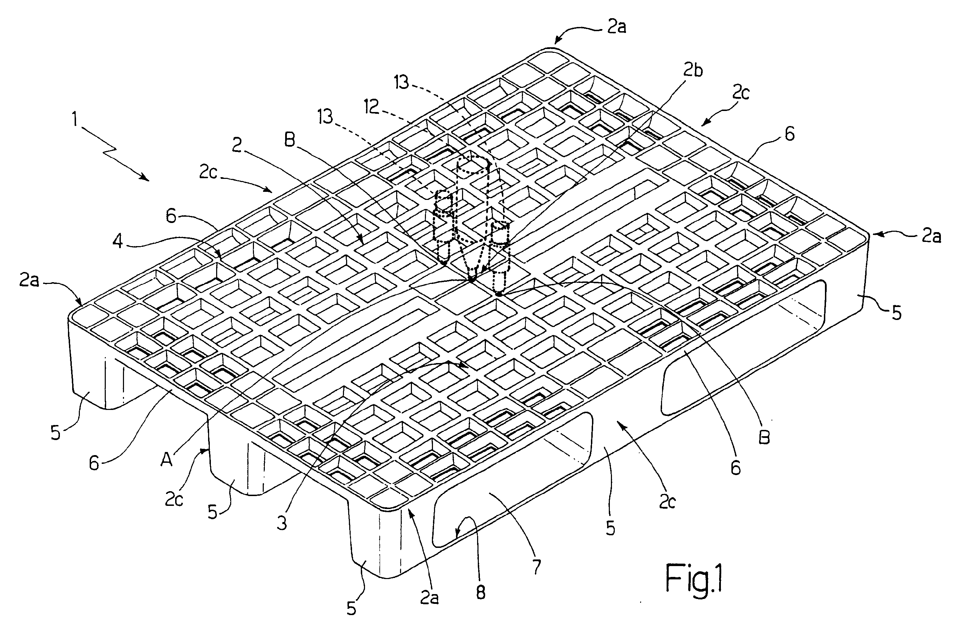

Number 1 in Figure 1 indicates as a whole a pallet in accordance with the present invention.

Pallet 1 comprises a rectangular lattice top surface 2, in turn comprising an inner portion 3 with larger openings, and a peripheral portion 4 with smaller openings and surrounding inner portion 3.

Pallet 1 comprises nine parallelepiped-shaped spacer members 5 formed in one piece with surface 2 and located respectively at the corners 2a and centre 2b of surface 2, and at the mid-point 2c of each of the four sides 6 of peripheral portion 4.

Pallet 1 comprises three supporting surfaces 7, only one of which is shown in Figure 1, and each of which extends from the respective bottom ends of three spacer members 5, with which it is formed in one piece. More specifically, supporting surfaces 7 comprise two outer supporting surfaces extending along the two long sides 6, and one inner supporting surface extending parallel to the other two and through centre 2b.

Substantially rectangular lateral openings 8 are thus formed, each of which is defined laterally by two adjacent spacer members 5, is defined at the top by a portion of a respective long side 6, and is defined at the bottom by a portion of a respective supporting surface 7.

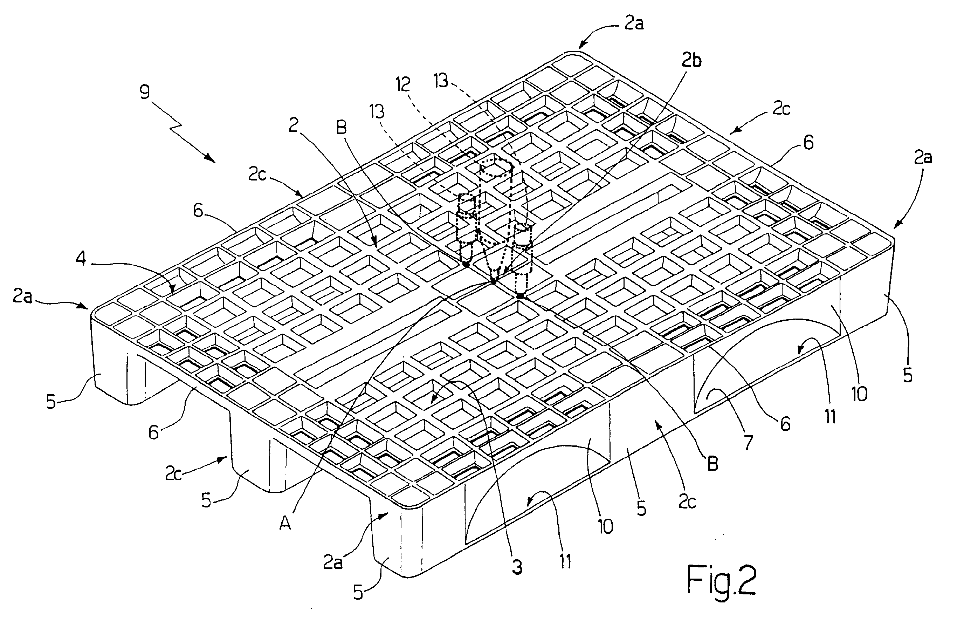

Number 9 in Figure 2 indicates as a whole a further pallet in accordance with the present invention.

Any identical parts of pallets 9 and 1 are indicated using the same reference numbers with no further description.

Pallet 9 comprises six arc-shaped members 10 formed in one piece with the rest of pallet 9, and each extending between a portion of a respective long side 6 and two adjacent spacer members 5. Substantially segmental lateral openings 11 are thus formed, each defined by a respective arc-shaped member 10 and by a portion of a respective supporting surface 7.

Pallets 1 and 9 described above are produced by an injection molding method comprising a first injection step, in which the plastic material is injected by an injector 12 through a single injection inlet A formed at the centre of spacer member 5 located at centre 2b of top surface 2; and a second injection step, in which gas is injected by two injectors 13 through two respective inlets B formed on opposite sides of inlet A and at the same spacer member 5.

A plastic pallet is thus formed comprising hollow sections and with only four joints in the material, thus making the pallet lighter and stronger than those of the known art.

Additional strength is also provided by arc-shaped members 10 of pallet 9.

## Claims

1. An injection molding method for producing an injection-molded plastic pallet (1; 9) comprising hollow-section members, **characterized by** comprising:
(a) a first step of injecting plastic material through a single injection inlet (A) located in the centre of a mold of the pallet which comprises a rectangular lattice top surface (2), in turn comprising an inner portion (3) with larger openings, and a peripheral portion (4) with smaller openings and surrounding inner portion (3); and
(b) a second subsequent step of injecting gas through two injection inlets (B) located close to and on opposite sides of said injection inlet (A) of the plastic material.

2. A injection-molded plastic pallet (1; 9) obtainable by means of the injection molding method claimed in Claim 1.

3. A injection-molded plastic pallet (1; 9) as claimed in Claim 2, wherein it comprises arc-shaped members (10) formed in one piece with the rest of said pallet (9), and each of which extends between a portion of a respective long side (6) of the top surface (2), and two adjacent spacer members (5) extending from said top surface (2); each of said arc-shaped members (10) forming, together with a portion of a respective supporting surface (7), a segmental lateral opening (11).

## Patentansprüche

1. Spritzgießverfahren zur Herstellung einer spritzgegossenen Kunststoffpalette (1; 9), umfassend Durchbrüche, **dadurch gekennzeichnet, dass** es umfasst:
(a) einen ersten Schritt des Einspritzens von Kunststoffmaterial durch einen einzelnen Einspritzkanal (A), der sich in der Mitte des Palettenwerkzeugs befindet, und eine rechtwinklige Gitteroberfläche (2), welche ihrerseits ein Innenteil (3) mit großen Öffnungen umfasst, und eine Randzone (4) mit kleineren Öffnungen, welche das Innenteil (3) umgibt; und
(b) daran anschließend einen zweiten Schritt des Einspritzens von Gas durch zwei Einspritzkanäle (B), welche sich nahe an den gegenüberliegenden Seiten das Einspritzkanals (A) für das Kunststoffmaterial befinden.

2. Spritzgegossene Kunststoffpalette (1; 9), erhältlich mittels des in Anspruch 1 beanspruchten Spritzgießverfahrens.

3. Spritzgegossene Kunststoffpalette (1; 9) nach Anspruch 2, wobei sie in einem Stück mit dem Rest der Palette (9) geformte, bogenförmige Teile (10) umfasst , wovon sich jeder zwischen einem Teil einer jeweiligen Längsseite (6) der Oberfläche (2) und zwei benachbarten, von der Oberfläche (2) ausgehenden Abstandshaltern (5) erstreckt; und jedes der bogenförmigen Teile (10) zusammen mit einem Teil einer zugehörigen Trägeroberfläche (7) stellenweise eine Seitenöffnung (11) bildet.

## Revendications

1. Procédé de moulage par injection pour produire une palette en plastique moulée par injection (1 ; 9) comprenant des éléments à section creuse, **caractérisé en ce qu'**il comprend :
(a) une première étape d'injection de la matière plastique par une seule entrée d'injection (A) située au centre d'un moule de la palette qui comprend une surface supérieure à treillis rectangulaire (2), comprenant à son tour une partie interne (3) avec de plus larges ouvertures, et une partie périphérique (4) avec de plus petites ouvertures et entourant la partie interne (3) ; et
(b) une seconde étape suivante d'injection du gaz par deux entrées d'injection (B) situées à proximité de et sur les côtés opposés de ladite entrée d'injection (A) de matière plastique.

2. Palette en plastique moulée par injection (1 ; 9) susceptible d'être obtenue au moyen du procédé de moulage par injection selon la revendication 1.

3. Palette en plastique moulée par injection (1 ; 9) selon la revendication 2, comprenant des éléments en forme d'arc (10) formés d'un seul tenant avec le reste de ladite palette (9), et dont chacun s'étend entre une partie d'un côté long (6) respectif de la surface supérieure (2) et deux éléments d'espacement (5) adjacents s'étendant à partir de ladite surface supérieure (2) ; chacun des éléments en forme d'arc (10) formant, conjointement à une partie d'une surface de support (7) respective, une ouverture latérale segmentée (11).
